Europäisches Patentamt

European Patent Office

Office européen des brevets

(11) Numéro de publication: **0 190 980**
**A1**

# (12) DEMANDE DE BREVET EUROPEEN

(21) Numéro de dépôt: 86420024.1

(22) Date de dépôt: 23.01.86

(51) Int. Cl.⁴: **A 01 K 59/02**

(30) Priorité: 24.01.85 FR 8501250

(43) Date de publication de la demande:
13.08.86 Bulletin 86/33

(84) Etats contractants désignés:
BE DE FR GB. IT

(71) Demandeur: **Furodet, Philippe**
**Pont Astier**
**F-63190 Lezoux(FR)**

(72) Inventeur: **Furodet, Philippe**
**Pont Astier**
**F-63190 Lezoux(FR)**

(74) Mandataire: **Caradot, Patrice**
**MAISONNIER, CORNILLON, CARADOT 15 rue Albert**
**Premier B.P. 247**
**F-42006 Saint Etienne Cédex(FR)**

(54) Couteau chauffant à dèsoperculer.

(57) L'invention concerne un système coupant chauffant destiné à l'apiculture. Le système coupant est formé d'un couteau comportant une lame (6) en deux demi-coquilles (1) et (2) soudées, à l'intérieur de laquelle se trouve au moins une résistance électrique (3). Des moyens de contrôle de l'intensité sont incorporés sur le circuit électrique. Application : couteau à désoperculer les cadres de miel.

FIG. 2

EP 0 190 980 A1

1
## COUTEAU CHAUFFANT A DESOPERCULER

L'invention concerne un système coupant destiné principalement à l'apiculture mais pouvant être appliqué à d'autres domaines (ménager, coupe de surgelé etc...).

Chaque apiculteur a besoin d'utiliser un couteau ou un système coupant soit à froid soit à chaud pour désoperculer les cadres de miel afin de séparer les alvéoles remplies de miel de la pellicule de cire operculée par les abeilles.

L'invention se rapporte à un couteau à désoperculer comportant au moins une résistance électrique.

Le couteau selon l'invention est réalisé de préférence en deux demi-coquilles découpées et embouties et pouvant être assemblées, par exemple par soudure étanche.

A l'intérieur, on dispose une résistance électrique plate ou tubulaire.

Selon une autre caractéristique de l'invention, des plaques de métal très conducteur (du cuivre par exemple) sont placées de part et d'autre de la résistance pour améliorer le transfert de chaleur de la résistance vers les parois du couteau.

Selon une autre caractéristique du couteau selon l'invention, celui-ci comporte un bossage contenant une thermistance permettant d'enregistrer la température avec une grande précision.

Cette thermistance est placée le plus près possible de l'extérieur du tranchant de la lame du couteau à désoperculer. Ceci est important car l'efficacité de l'opération dépend de la température exacte obtenue.

La lame du couteau est reliée au manche réalisé soit en surmoulé, soit également en deux demi-coquilles. A l'intérieur du manche se trouve le système de contrôle de l'alimentation électrique de la résistance contenue dans la lame.

Selon une autre caractéristique de l'invention, le circuit électrique selon l'invention comporte un potentiomètre permettant le réglage manuel de l'intensité électrique dans la résistance chauffante.

Selon encore une autre variante de l'invention, le circuit électrique selon l'invention comporte un circuit intégré permettant de régler la température entre une température haute et une température basse prédéterminées.

On comprend ainsi aisément les avantages du couteau à désoperculer selon l'invention.

En incorporant un système de chauffage à l'intérieur de la lame, on améliore considérablement l'efficacité de la désoperculation.

La réalisation de la lame en deux demi-coquilles est un procédé économique permettant de réaliser un couteau à bon marché.

Par ailleurs, ce mode de réalisation permet d'incorporer aisément la résistance électrique nécessaire pour le réchauffage de la lame.

Les dessins annexés, donnés à titre d'exemples non limitatifs, permettront de mieux comprendre les caractéristiques de l'invention.

La figure 1 est une vue en perspective extérieure du couteau à désoperculer selon l'invention.

La figure 2 est une vue en plan avec coupe partielle du couteau de désoperculation selon l'invention.

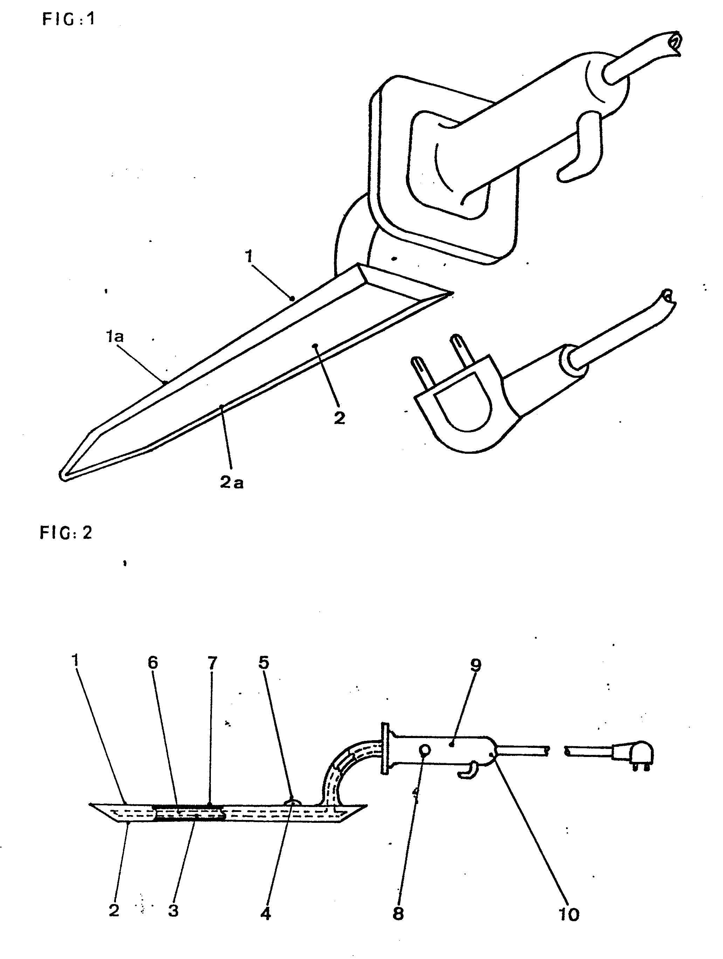

On a représenté sur la figure 1 une vue en perspective montrant la lame formée de deux demi-coquilles (1) et (2) soudées entre elles sur les arêtes (1a) et (2a).

On a représenté sur la figure 2 une vue en plan du couteau à désoperculer. La résistance électrique (3) est située à l'intérieur des demi-coquilles (1) et (2). Un bossage (4) situé sur la lame (6) contient une thermistance (5). Des plaques (7) de métal conducteur, par exemple du cuivre, sont situées de part et d'autre de cette résistance (3). Un potentiomètre (8) permet de régler l'intensité délivrée à la résistance (8). En variante, un circuit intégré (9), situé de préférence dans le manche (10) régule l'intensité en fonction des informations délivrées par la thermistance (5).

REVENDICATIONS

1. Dispositif de désoperculation de cadre de miel formé par un couteau, caractérisé en ce qu'il comporte un circuit électrique avec au moins une résistance (3) située à l'intérieur de la lame (6), celle-ci étant formée de deux demi-coquilles assemblées (1, 2).

2. Dispositif selon la revendication 1, caractérisé en ce que les deux demi-coquilles (1, 2) sont soudées de façon étanche le long de leurs bords formant les arêtes (1a, 2a) du couteau à désoperculer.

3. Dispositif selon une des revendications 1 et 2, caractérisé en ce que le circuit électrique comporte une thermistance (5) placée dans un bossage (4) sur la lame (6) du couteau à désoperculer à proximité de l'arête.

4. Dispositif selon la revendication 1, caractérisé en ce que la résistance (3) est entourée de plaques (7) de métal conducteur vers les arêtes (1a, 2a).

5. Dispositif selon la revendication 1, caractérisé en ce que le circuit électrique comporte un potentiomètre (8) de réglage manuel.

6. Dispositif selon la revendication 1, caractérisé en ce que le circuit électrique comporte un circuit intégré (9) permettant de régler la température autour d'une valeur prédéterminée ou entre deux températures (haute et basse) prédéterminées.

FIG:1

FIG: 2

0190980

Office européen
des brevets

**RAPPORT DE RECHERCHE EUROPEENNE**

Numero de la demande

EP 86 42 0024

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.⁴) |
|---|---|---|---|
| X | US-A-2 960 592 (PIERCE) <br> * Figures 1-3; colonne 2, lignes 15-64; colonne 3, lignes 25-47 * | 1,2 | A 01 K 59/02 |
| A | | 3,4 | |
| | --- | | |
| A | GB-A- 26 469 (LEA) <br> * Figures 1,2; page 1, lignes 33-36 * | 2 | |
| | ----- | | |

**DOMAINES TECHNIQUES RECHERCHES (Int. Cl.⁴)**

A 01 K

Le présent rapport de recherche a été établi pour toutes les revendications

| Lieu de la recherche | Date d'achèvement de la recherche | Examinateur |
|---|---|---|
| LA HAYE | 29-04-1986 | VILBIG K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82